Europäisches Patentamt

(19) European Patent Office

Office européen des brevets

(11) Veröffentlichungsnummer: **0 136 367**

A1

(12) # EUROPÄISCHE PATENTANMELDUNG

(21) Anmeldenummer: 83109838.9

(22) Anmeldetag: 01.10.83

(51) Int. Cl.⁴: **B 29 C 49/02**

(43) Veröffentlichungstag der Anmeldung:
10.04.85 Patentblatt 85/15

(84) Benannte Vertragsstaaten:
DE FR GB IT

(71) Anmelder: Staehle Maschinenbau GmbH
Dieselstrasse 25
D-7022 Leinfelden-Echterdingen(DE)

(72) Erfinder: Effenberger, Alfred, Dipl. Ing.
Finkenstrasse 13
D-7024 Filderstadt 4(DE)

(74) Vertreter: Jackisch, Walter, Dipl.-Ing.
Menzelstrasse 40
D-7000 Stuttgart 1(DE)

(54) Vorrichtung zum Herstellen von Hohlkörpern aus thermoplastischem Material durch Tauchblasen.

(57) Die Anmeldung betrifft eine Vorrichtung zum Herstellen von Hohlkörpern aus thermoplastischem Material durch Tauchblasen, mit mindestens einem Blasdorn (1,1'), der von einer Tauchstation (T) mit mindestens einer Kunststoffkammer (6) sowie mindestens einer zweiteiligen Spritzform zum Spritzen eines Halsteiles des herzustellenden Hohlkörpers in eine Blasstation (B) mit mindestens einer ebenfalls zweiteiligen Blasform bewegbar ist, und mit einer Schließvorrichtung (16) für die Blas- und Spritzform, die jeweils eine bewegbare Formhälfte (3,3' bzw. 4,4') haben. Das Ziel der Erfindung ist eine Vorrichtung dieser Art so auszubilden, daß zum Öffnen und Schließen der Spritz- und Blasform sowie zum Bewegen des Blasdornes (1,1') nur ein einziger gemeinsamer Antrieb erforderlich ist. Hierzu sind die bewegbaren Spritz- und Blasformhälften (3,3' bzw. 4,4') gemeinsam mit dem Blasdorn (1,1') uber die Schließvorrichtung (16) in die Schließ- und Offenstellung bzw. eine Zwischenlage zum freien Verschwenken des Blasdornes (1,1') ausgebildet.

EP 0 136 367 A1

./...

Croydon Printing Company Ltd.

Fig. 1

Staehle Maschinenbau
Gesellschaft mit beschränkter
Haftung
Dieselstraße 25
7022 Leinfelden-Echterdingen ¿

A 1 - 86144/bri

## Vorrichtung zum Herstellen von
## Hohlkörpern aus thermoplastischem Material
## durch Tauchblasen

Die Erfindung betrifft eine Vorrichtung zum Herstellen von
Hohlkörpern aus thermoplastischem Material durch Tauchblasen nach dem Oberbegriff des Anspruches 1.

Bei bekannten Vorrichtungen dieser Art (DE-PS 1 800 263)
werden die beiden Formhälften der Spritz- und Blasform
über jeweils eine gesonderte Schließ- und Öffnungseinrichtung auf den Blasdorn zu- bzw. von diesem wegbewegt. Zur
Bildung eines Vorformlings wird zunächst der Blasdorn
zwischen die beiden Formhälften der geöffneten Spritzform
verschoben, dann wird die Spritzform geschlossen, wobei
sich die beiden Formhälften um den Blasdorn legen. Hierauf
wird der Blasdorn in eine Kunststoffkammer mit plastifiziertem Kunststoff eingeführt, bis die Kunststoffkammer
mit einer Austrittsdüse an der Spritzform anliegt. Danach
wird ein Hals des Hohl-körpers durch Einspritzen von
Kunststoff in die Spritzform gebildet und dann der Blasdorn aus der Kunststoffkammer zurückgezogen, wobei sich um
den Blasdorn ein Kunststoffmantel, ein sogenannter Vorformling, bildet. Dieser Vorformling wird dann von einem in der
Kunststoffkammer vorhandenen Kunststoffstrang abgetrennt
und die Spritzform geöffnet. Der freiwerdende Blasdorn wird anschließend mit dem Vorformling in die Blasstation zwischen die beiden Formhälften der Blasform gebracht, worauf diese geschlossen wird und der Formling darin aufgeblasen wird. Infolge der einzelnen Schließvorrichtungen für die Spritz- und Blasform und der Bewegungseinrichtung für den Blasdorn sind diese bekannten Vorrichtungen konstruktiv aufwendig ausgebildet und damit mit erheblichen Herstellungskosten verbunden. Außerdem bedürfen solche Vorrichtungen einer aufwendigen Steuerungstechnik, die verhältnismäßig störanfällig ist.

Der Erfindung liegt die Aufgabe zugrunde, eine Vorrichtung dieser Art so auszubilden, daß zum Öffnen und Schließen der Spritz- und Blasform sowie zum Bewegen des Blasdornes nur ein einziger gemeinsamer Antrieb erforderlich ist.

Diese Aufgabe wird bei einer Vorrichtung der gattungsbildenden Art erfindungsgemäß mit den kennzeichnenden Merkmalen des Anspruches 1 gelöst.

Infolge der erfindungsgemäßen Ausbildung können mit einem einzigen linearen Antrieb die Spritz- und Blasform gemeinsam betätigt und gleichzeitig der Blasdorn in eine Zwischenstellung bewegt werden, aus der er frei zwischen den Blas- und Spritzformhälften verschwenkt werden kann. Durch den Wegfall weiterer Antriebe ist die Vorrichtung äußerst einfach ausgebildet und läßt sich daher mit nur geringen Kosten herstellen. Sie ist außerdem wartungsfreundlich und einfach zu bedienen. Die aufwendige Steuerungstechnik der bekannten
Vorrichtungen entfällt. Mit der Vorrichtung können die
Hohlkörper auf einfache Weise und in kurzer Zeit hergestellt werden.

Weitere Merkmale der Erfindung ergeben sich aus den weiteren Ansprüchen, der Beschreibung und den Zeichnungen.

Die Erfindung wird nachstehend anhand dreier in den Zeichnungen dargestellter Ausführungsbeispiele näher beschrieben. Es zeigt:

Fig. 1    einen Teil einer erfindungsgemäßen Vorrichtung
          im Vertikalschnitt  mit einer Spritz- und Blasform in Offenstellung und einem Blasdorn in einer
          Zwischenstellung, in der er zwischen einander
          gegenüberliegenden Formhälften der Spritz- und
          Blasform frei verschwenkbar ist,

Fig. 2    einen Schnitt längs der Linie II-II in Fig. 1,

Fig. 3    einen Teil einer weiteren erfindungsgemäßen Vorrichtung mit Blas- und Spritzform und zwei Blasdornsätzen mit jeweils zwei Blasdornen in einer der

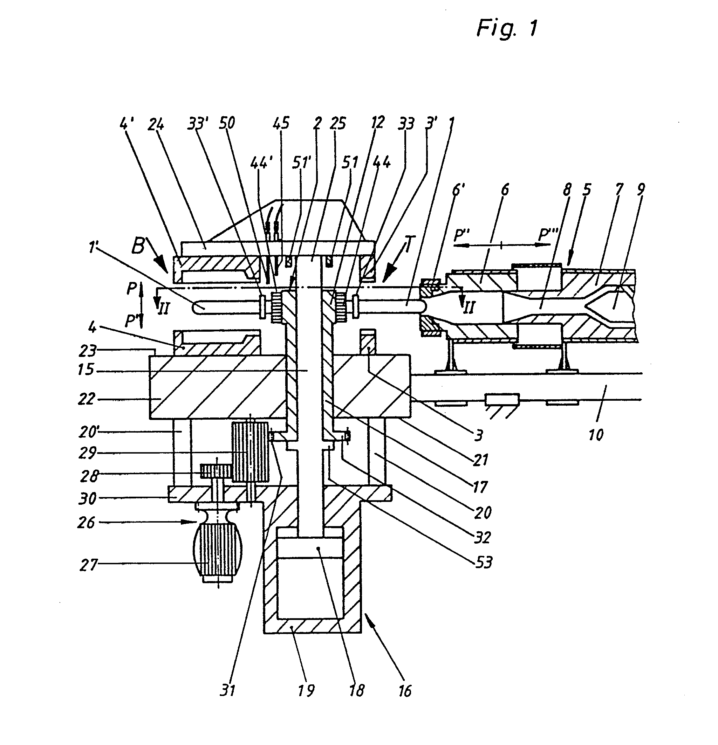

          in Fig. 1 entsprechenden, jedoch gegenüber
          dieser vergrößerten Darstellung,

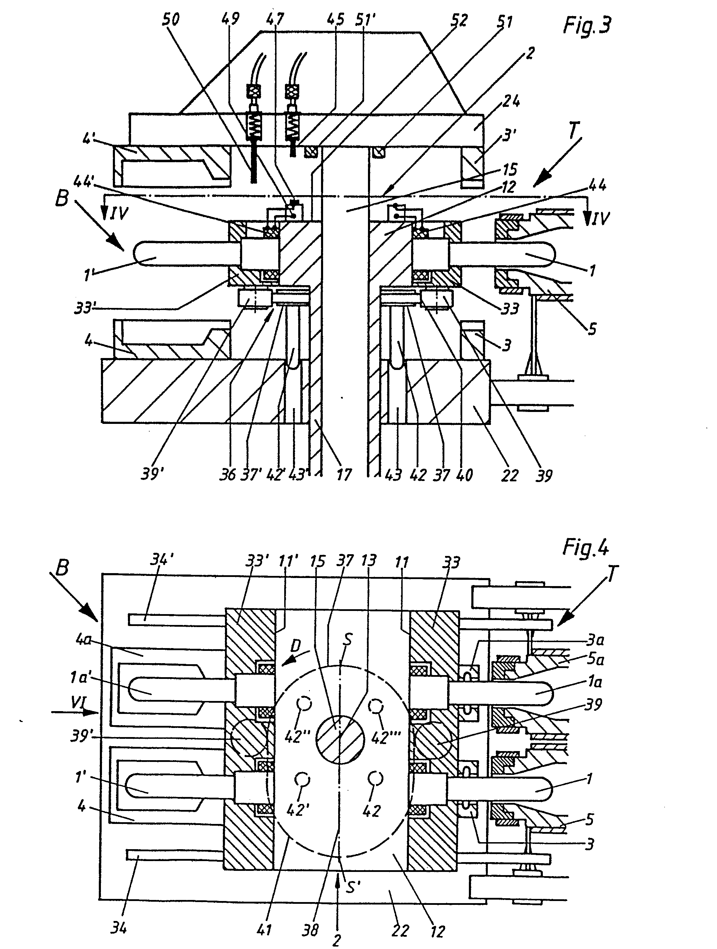

Fig. 4    einen Schnitt längs der Linie IV-IV in Fig. 3,

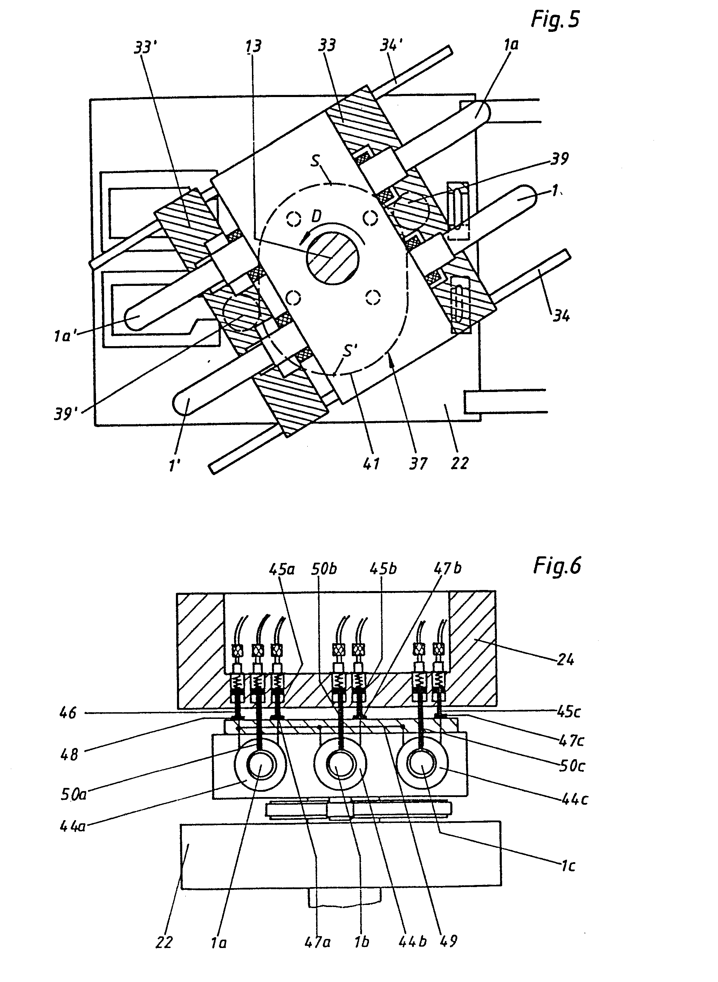

Fig. 5    einen Dornträger der Vorrichtung nach Fig. 3 und
          4 in einer gegenüber Fig. 4 verschwenkten Lage und

Fig. 6    einen Teil einer dritten Ausführungsform einer
          erfindungsgemäßen Vorrichtung in einer Ansicht
          entsprechend dem Pfeil VI in Fig. 4.

Die Vorrichtungen nach den Fig. 1 bis 6 dienen zum Herstellen von Flaschen oder anderen Hohlkörpern aus thermoplastischem Kunststoff nach dem sogenannten Tauchblasverfahren, bei dem, wie im einzelnen in der DE-PS 1 800 263 beschrieben, zunächst in einer Tauchstation ein Vorformling hergestellt wird, der danach in einer Blasstation zu dem Hohlkörper aufgeblasen wird.

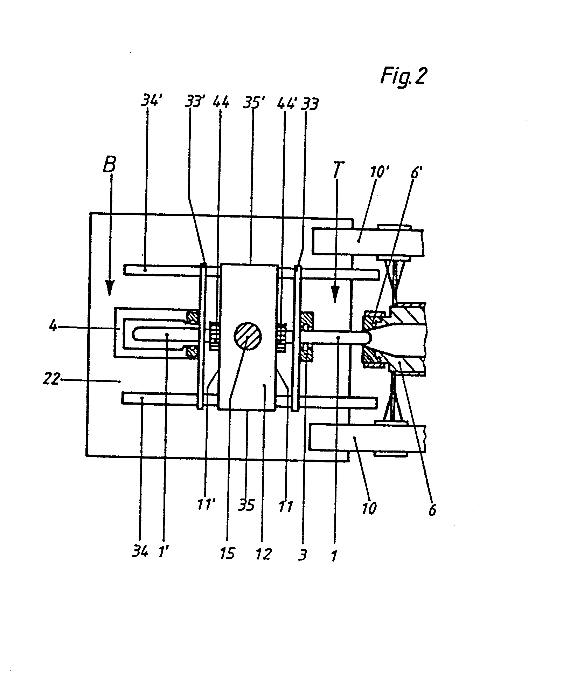

Wie die Fig. 1 und 2 zeigen, besteht die Vorrichtung im wesentlichen aus zwei Blasdornen 1 und 1', die auf einem als Drehtisch ausgebildeten Dornträger 2 angeordnet sind, aus einer aus zwei Formhälften 3 und 3' bestehenden Spritzform zum Spritzen eines Flaschenhalses des (nicht dargestellten) Vorformlings und aus einer ebenfalls aus zwei Formhälften 4 und 4' bestehenden Blasform. Außerdem weist die Vorrichtung eine Tauchkammereinrichtung 5 mit einer dem Blasdornsatz 1, 1' zugeordneten Kunststoffkammer 6 mit einer Austrittsdüse 6' und mit einer auf der vom Blasdorn 1 abgewandten Seite an die Kunststoffkammer anschließenden Schneckenkammer 7 auf, aus der plastifizierter Kunststoff über einen Kanal 8 in die Kunststoffkammer 6 mittels einer Schnecke 9 gefördert wird. Zur Herstellung des Vorformlings muß der in der Tauchstation T liegende Blasdorn 1 in die Kunststoffkammer 6 eintauchen, wozu diese zusammen mit der Schneckenkammer 7 axial auf Holmen 10, 10' gegenüber dem Blasdorn verschiebbar angeordnet ist.

Die Blasdorne 1 und 1' sind mittig an einander gegenüberliegenden Längsseiten 11 und 11' einer Kopfplatte 12 des Dornträgers 2 befestigt und weisen in entgegengesetzte Richtungen(Fig. 2). Der Dornträger 2 ist auf einer Kolbenstange 15 einer Kolbenzylindervorrichtung 16 axial verschiebbar und drehbar angeordnet. Die Kolbenstange 15 ragt durch eine zentrale Führungsbohrung eines Dornträgerrohres 17 und ihr Kolben 18 liegt in einem Zylinder 19, der über Verbindungsstangen 20, 20' an der einen Plattenseite 21 einer Fußplatte 22 befestigt ist. Auf der anderen Plattenseite 23 der Fußplatte 22 sind die Formhälften 3, 4 der Spritzform 3, 3' und der Blasform 4, 4' starr befestigt. Die anderen Formhälften 3' und 4' der Spritz- und Blasform 3, 3' bzw. 4, 4' sind zum Öffnen und Schließen der Spritz- und Blasform an einer mit der Kolbenstange 15 verbundenen Formschlußplatte 24 deckungsgleich zu den feststehenden Formhälften 3, 4 angeordnet. Die Formschlußplatte 24 liegt parallel zur Fußplatte 22 und ist am freien Ende 25 der Kolbenstange 15 befestigt. Dadurch können die Formhälften 3', 4' der Spritz- und Blasdorm über die Kolbenstange 15 in Richtung des Doppelpfeiles P in Fig. 1 gegenüber den feststehenden Formhälften 3, 4 zum Öffnen und Schließen der Spritz- und Blasform verschoben werden.

In Fig. 1 und 2 sind die Blasdorne 1 und 1' in einer Zwischenstellung gezeigt, in der sie von den feststehenden Formhälften 3 und 4 der Spritz - und Blasform 3, 3' und 4, 4' so weit abgehoben sind, daß sie etwa mit gleichem Abstand zwischen den einander gegenüberliegenden Formhälften 3 und 3' bzw. 4 und 4' der Spritz- und Blasform liegen. In dieser Zwischenstellung können die Blasdorne 1 und 1' nach dem Spritzen des Halsstückes bzw. nach dem Aufblasen des Vorformlings zum fertigen Hohlkörper in der Spritz- und Blasform 3, 3' bzw. 4, 4' um 180° verschwenkt werden, so daß der zuvor in der Tauch- bzw. Blasstation T bzw. B liegende Blasdorn 1 bzw. 1' nachher in der Blas- bzw. Tauchstation liegt (Fig. 2).

6

Zum Verdrehen der Blasdorne 1 und 1' zwischen der Tauch-
und Blasstation ist ein Drehantrieb 26 vorgesehen, der im
wesentlichen aus einem Motor 27 und zwei miteinander kämmenden Ritzeln 28, 29 besteht. Der Motor 27 ist an einen
Flansch 30 des Zylinders 19 geschraubt. Die Antriebswelle
des Motors 27 trägt das Ritzel 28, das mit dem drehbar im
Flansch gelagerten größeren Ritzel 29 kämmt.Dieses ist mit
einer stirnseitigen Verzahnung 31 einer Endplatte 32 des
Dornträgers 2 in Eingriff. Die Kopfplatte 12 und die Endplatte 32 des Dornträgers 2 verlaufen parallel zueinander;
die Kopfplatte 12 ist in Draufsicht gemäß Fig. 2 rechteckig
und die Endplatte 32 kreisförmig ausgebildet.

Auf den Blasdornen 1 und 1' sind jeweils mit geringem Abstand von den Längsseiten 11 und 11' zwischen der Kopfplatte 12 und der Spritz- bzw. Blasform 3, 3' bzw. 4, 4'
plattenförmigeAbstreifer 33 und 33' angeordnet. Mit ihnen
wird der in der Blasform 4, 4' hergestellte Hohlkörper
beim Verschwenken des zugehörigen Blasdornes 1' aus der
Blasstation B in die Tauchstation T abgestreift. Hierzu
wird der dem Blasdorn 1' zugeordnete Abstreifer 33' längs
des Blasdornes sowie auf gegenseitig angeordneten und zu
den Blasdornen 1 und 1' parallelen Führungsstangen 34, 34'
(Fig. 2) so weit nach außen geschoben, bis der (nicht dargestellte) Hohlkörper vom Blasdorn abfallen kann. Die Führungsstangen 34, 34' sind in der Kopfplatte 12 mit geringem Abstand von den benachbarten Schmalseiten 35, 35' an
den Längsseiten 11, 11' der Kopfplatte befestigt.

Die Abstreifer 33, 33' sind auf die Blasdorne 1 und 1'
und die Führungsstangen 34, 34' aufgesteckt. Sie weisen
hierzu entsprechende (nicht dargestellte) Stecköffnungen
auf.

Um die Abstreifer 33, 33' (Fig. 1) aus der dargestellten Stellung nach außen verschieben zu können, ist eine Verschiebeeinrichtung 36 vorgesehen, die lediglich für die Vorrichtung gemäß den Fig. 3 bis 5 dargestellt ist. Diese Vorrichtung unterscheidet sich von der Ausführungsform nach den Fig. 1 und 2 nur dadurch, daß anstelle der Blasdorne 1 und 1' zwei gleich ausgebildete Blasdornsätze 1, 1a und 1', 1a' mit jeweils zwei Blasdornen vorgesehen sind. Darum sind für diese Ausführungsformen und auch für die Ausführungsform nach Fig. 6, die abweichend von den Vorrichtungen nach den Fig. 1, 2 und 3 bis 5 zwei Blasdornsätze mit jeweils drei Blasdornen hat - sonst aber diesen Ausführungsformen entspricht - dieselben Bezugsziffern wie in den Fig. 1 und 2 verwendet worden.

Wie insbesondere die Fig. 3 und 4 zeigen, besteht die Verschiebeeinrichtung 36 aus einer auf der Fußplatte 22 gehaltenen und dicht unterhalb der Kopfplatte 12 angeordneten Ringscheibe 37 und zugehörigen Laufrollen 39 und 39', die an den Abstreifern 33 bzw. 33' befestigt sind. Die Laufrollen 39 und 39' laufen beim Drehen des Dornträgers 2 auf dem Außenrand 40 der Ringscheibe 37 ab, die eine Kurvenscheibe bildet. Die Ringscheibe 37 hat vorzugsweise elliptischen Umriß (gestrichelte Linien in Fig. 4) und liegt exzentrisch zur Kolbenstange 15. Die Längsmittelebene 38 der Ringscheibe 37 verläuft parallel zu den Längsseiten 11 und 11' der Kopfplatte 12 des Dornträgers 2 und enthält die Achse 13 der Kolbenstange 15. Die Scheitelpunkte S und S' der Ringscheibe 37 haben verschiedene Abstände von der Achse 13. Der Scheitelpunkt S, der beim Verschwenken der Blasdorne 1 und 1' bzw. der weiteren Blasdorne 1a und 1a' in Pfeilrichtung D aus der Stellung gemäß Fig. 4 von der Tauchstation T in die Blasstation B von der Laufrolle 39 des Abstreifers 33 überfahren wird, hat kleineren, vorzugsweise etwa gleichen Abstand von der Achse 13 wie die Laufrolle 39 und 39' in der in Fig. 4 dargestellten Ruhestellung. Der den Scheitelpunkt S aufweisende Randabschnitt der Ringscheibe 37 liegt somit annähernd auf einem Kreis um die Achse 13 der Kolbenstange 15, in Draufsicht gemäß Fig. 4 gesehen. Dadurch behält der Abstreifer 33, der den Blasdornen 1 und 1a zugeordnet ist, beim Verschwenken aus der Tauchstation T in die Blasstation B seine an der Kopfplatte 12 anliegende Lage bei. Der andere Abstreifer 33' wird bei dieser Schwenkbewegung aber radial in bezug auf die Kolbenstange nach außen verschoben, da seine Laufrolle 39' an dem größeren Abstand von der Achse 13 der Kolbenstange 15 aufweisenden, den Scheitelpunkt S' enthaltenden Randabschnitt 41 der Ringscheibe 37 abrollt (Fig. 5).

Die Ringscheibe 37 weist vorzugsweise vier parallele zur Kolbenstange 15 und mit gleichem Abstand von dieser angeordnete Stäbe 42, 42' bis 42 "' auf, die über den feststehenden Formhälften 3, 3a und 4, 4a der Spritzformen 3, 3' und 3a und der Blasform 4, 4' und 4a zugewandten Seite 37' der Ringscheibe 37 und in Bohrungen 43, 43' in der Fußplatte 22 ragen.

Da die Abstreifer 33 und 33' durch entsprechende Ausbildung der Ringscheibe 37 beim Drehen des Dornträgers 2 über die ganze Länge der Blasdorne 1 und 1' und 1a und 1a' verschoben werden und diese vollständig umgreifen, können nicht nur fertige Hohlkörper, sondern auch nur teilweise aufgeblasene Vorformlinge von den Blasdornen einfach und schnell entfernt werden. Da diese Abstreifbewegung beim Verschwenken
der Blasdorne von der Blasstation B in die Tauchstation T
selbsttätig erfolgt, kann eine bisher erforderliche dritte
Station entfallen, in der die Blasdorne zum Abstreifen
angehalten werden müssen. Dadurch ist die Vorrichtung konstruktiv besonders einfach ausgebildet. Vor allem aber kann
das Herstellungsverfahren durch den Wegfall der dritten
Station in kürzerer Zeit und damit wirtschaftlicher durchgeführt werden.

Da den Blasdornen beim Aufblasen des Vorformlings in der
Blasstation B und dem nachfolgenden Kühlen des Hohlkörpers
Wärme entzogen wird, tritt von der Dornspitze zum Dornträger ein ungünstiges Temperaturgefälle auf. Um dies auszugleichen, müssen die Blasdorne vor dem Eintauchen in die
zugehörige Kunststoffkammer -bei mehreren Dornsätzen ist
jedem Blasdorn jeweils eine Kunststoffkammer 5, 5a (Fig. 3,
4) zugeordnet - auf eine bestimmte Temperatur erwärmt werden.

Bei herkömmlichen Vorrichtungen zum Tauchblasen werden die
Blasdorne durch eingesetzte Heizpatronen oder durch ein
zirkulierendes Heizmedium beheizt. Für die Wärmeenergiezufuhr über Kabel- oder Schlauchleitungen sind äußerst
aufwendige Drehanschlüsse erforderlich. Bei sehr kleinen
Dorndurchmessern ist eine solche Heizung nicht durchführbar.

Bei den Vorrichtungen nach den Fig. 1 bis 6 kann das
Temperaturgefälle von der Dornspitze zum Dornträger äußerst
günstig ausgeglichen werden, indem den Blasdornen über den
Dornträgern, oder, wie in den Zeichnungen dargestellt, über ein Heizband 44, 44' Wärme zugeführt werden (Fig. 1
und 2). Dieses umgibt den zugehörigen Blasdorn an seinem
von der Dornspitze abgewandten Ende, so daß es zwischen
dem Abstreifer 33 bzw. 33' und der Kopfplatte 12 des Dornträgers 2 liegt (Fig. 1 und 2). Den Heizbändern 44a, 44b
und 44c in Fig. 6 sind jeweils stromführende Kontaktstifte 45a, 45b, 45c und 46 zugeordnet, die in der Formschlußplatte 24 befestigt sind. Beim Schließen der Spritz-
und Blasform 3, 3' bzw. 4, 4' wird durch das Absenken der
Formschlußplatte 24 eine Verbindung zwischen den Kontaktstiften 45a, 45b, 45c und 46 mit den Kontaktplatten
47a, 47b, 47c und 48 der Heizbänder hergestellt. Der Stromanschluß über die Kontaktplatte 48 ist durch eine Kontaktschiene 49 mit allen Heizbändern verbunden.

Dies ist in den Fig. 3 und 6 deutlich dargestellt,  die
die Vorrichtung in Arbeitsstellung bei geschlossener
Blas- und Spritzform zeigen.

Durch diese Ausbildung werden die bekannten, komplizierten Drehanschlüsse für die Stromzufuhr vermieden. Die Zufuhr der Wärme erfolgt diskontinuierlich, da sie beim Verschwenken der Blasdorne von der einen in die andere Station
kurzzeitig unterbrochen ist. Sie beschränkt sich vorwiegend
auf die Ruhezeit der Dornträger in der Blasstation. In
der Schließstellung der Formschlußplatte 24 liegt an jedem Blasdorn 1a, 1b und 1c jeweils ein zugehöriger Temperaturfühler 50a, 50b und 50c an.

Die Temperaturmessung zur Regelung der Beheizung erfolgt ebenfalls während der Ruhephase der Blasdorne in der Blasstation über die Temperaturfühler 50. Auch für sie sind keine aufwendigen Drehanschlüsse erforderlich.

Die beschriebene diskontinuierliche Beheizung der Blasdorne kann auch dann eingesetzt werden, wenn die Blasdorne von innen beheizt werden sollen.

Die Temperaturregelung erfolgt über Mikrocomputer, welche die Stromstärke und die Heizdauer während der Ruhephase der Blasdorne regeln.

Die unterbrochene bzw. intermittierende Beheizung kann auch für Spritzdorne von Spritzblasmaschinen mit Drehtischen angewandt werden.

Zum Herstellen einer Flasche werden zunächst die Spritz- und Blasform 3, 3' und 4, 4' durch Betätigen der als Schließeinrichtung dienenden Kolben-Zylinder-Vorrichtung 16 geschlossen. Dabei bewegt sich die Kolbenstange 15 in Richtung auf die Fußplatte 22 und nimmt die fest mit ihr verbundene Formschlußplatte 24 mit den daran befestigten beweglichen Formhälften 3' und 4' der Spritz- und Blasform mit, bis die Formschlußplatte 24 mit Anschlägen 51, 51' auf der Stirnseite 52 (Fig. 3) der Kopfplatte 12 des Dornträgers 2 zur Anlage kommt. Dadurch wird beim weiteren Absenken des Kolbens 18 der Dornträger 2, der mit seiner die Verzahnung 31 aufweisenden Endplatte 32 auf einem ringscheibenförmigen Bund 53 der Kolbenstange 15 liegt, mitgenommen, bis die beiden Blasdorne 1 und 1' und die Formhälften 3' und 4' an den feststehenden Formhälften 3 und 4 zur Anlage kommen und die Spritz- und Blasform 3,3'
bzw. 4, 4' geschlossen sind. Das Ritzel 29 ist so lang,
daß es bei dieser Verschiebebewegung in Eingriff mit der
Außenverzahnung 31 der Endplatte 32 bleibt. Hierauf wird
zur Herstellung des Vorformlings die Kunststoffkammer 6
mit der mit ihr fest verbundenen Schneckenkammer 7 und
der dem Dorn zugewandten, auswechselbaren Austrittsdüse
6' auf den Hdmen 10,10' in Richtung des Pfeiles P''
bewegt, wobei der Dorn 1 durch die Austrittsdüse 6' in
der Kunststoffkammer 6 eintaucht. Sie wird so weit über
den Blasdorn 1 geschoben, bis die Austrittsdüse 6' fest
an der Spritzform 3,3' anliegt. Hierauf wird in der Kunststoffkammer 6 durch Drehen der Schnecke 9 sowie durch
Einschieben der Schneckenkammer 7  Druck erzeugt, wobei der
plastifizierte Kunststoff in die Spritzform 3,3' eindringt, damit das Halsteil gespritzt wird. Danach wird die
Kunststoffkammer 6 mit der Schneckenkammer 7 in entgegengesetzte Richtung (Pfeil P''') zurückbewegt, während der
Druck in der Kunststoffkammer aufrechterhalten bleibt, so
daß plastifizierter Kunststoff austritt und den Blasdorn 1
unter Bildung des Vorformlings umgibt. Zur Druckveränderung
können die Kunststoff- und Schneckenkammer 6 und 7 relativ
zueinander verschoben werden, was durch (nicht dargestellte)
Hydraulikzylinder erreicht wird.

Während der beschriebenen Herstellung des Vorformlings
kann ein den anderen Blasdorn 1' des Blasdornsatzes 1,1'
umgebender, in der Tauchstation T zuvor hergestellter Vorformling in der Blasform 4,4' zur Herstellung des Flaschenkörpers aufgeblasen werden.

Nach dem Austauchen des Blasdornes 1 aus der Kunststoffkammer 6 werden die Spritzformen 3, 3' und gleichzeitig
die Blasformen 4, 4' geöffnet, indem die Kolbenstange
15 der Kolben-Zylinder-Vorrichtung 16 ausgefahren wird.
Hierbei heben zunächst nur die beweglichen Formhälften
3' und 4' von den feststehenden Formhälften 3 und 4 ab,
während die Blasdorne 1 und 1' noch auf den Formhälften
3 und 4 liegen. Erst wenn die Kolbenstange 15 mit ihrem
Bund 53 an der Endplatte 32 des Dornträgers 2 zur Anlage
kommt, wird dieser in gleicher Richtung mitgenommen,
wobei die Blasdorne 1 und 1' von den feststehenden Formhälften 3 und 4 abgehoben werden. In der Offen- bzw.
Ruhestellung der Spritz- und Blasform 3, 3' und 4, 4'
haben die Blasdorne 1 und 1' etwa gleichen Abstand von
den einander gegenüberliegenden Formhälften (Fig. 1, 3).

Aus dieser Ruhestellung werden die Blasdorne 1 und 1'
über den Drehantrieb 26 in Drehung versetzt, wobei über
die Ritzel 28, 29 und die Verzahnung 31 der Dornträger
2 um die Kolbenstange 15 gedreht wird, bis der in der Blasstation B liegende Dorn 1' und der in der Tauchstation T
liegende Dorn 1' in die Tauchstation bzw. in die Blasstation bewegt worden sind (Fig. 2). Der auf dem Blasdorn 1' (Fig.1) sitzende (nicht dargestellte) Flaschenkörper muß bei diesem Verschwenkvorgang abgestreift werden,
bevor der Blasdorn die Tauchstation T erreicht. Dies wird
dadurch erreicht, daß, wie oben erläutert, beim Verschwenken des Blasdornes 1' um die Kolbenachse 13 die zugehörige
Laufrolle 39' des Abstreifers 33' auf der Ringscheibe 37
abläuft. Infolge der exzentrischen Lage der feststehenden
Ringscheibe zur Kolbenachse wird der Abstreifer 33' so weit
auf den Führungsstangen 34 und 34' nach außen verschoben,
daß selbst nicht vollständig aufgeblasene Hohlkörper
bzw. Flaschenkörper vom Blasdorn 1' abgestreift werden kön-

nen, bevor dieser in die Tauchstation T gelangt. Wie Fig. 5 zeigt, hat der Abstreifer 33' seine größte Entfernung vom Dornträger 2,wenn die Laufrolle 39' den Scheitelpunkt S' erreicht, so daß die jeweiligen Hohlkörper schon nach einer Drehung von etwa 90° von den Blasdornen abgestreift werden. Nachdem die Laufrolle 39' den Scheitelpunkt S' überschritten hat, wird der Abstreifer 33' unter Federkraft wieder in Richtung auf den Dornträger 2 verschoben, bis er bei Erreichen der Tauchstation T. am Dornträger 2 zur Anlage kommt. Daher kann nach Schließen der Spritz- und Blasform 3, 3' und 4, 4' in der Tauchstation T. ein neuer Vorformling gebildet und in der Blasstation B gleichzeitig ein bereits gebildeter Vorformling aufgeblasen werden.

Außer der Tauch- und Blasstation können weitere Stationen zum Konfektionieren der Vorformlinge oder zum Nachbehandeln der Hohlkörper vorgesehen sein. Für solche Zwischen- und Folgestufen verschiedener Verfahrenstechniken sind entsprechend viele Blasdornsätze am Blasdornträger befestigt.

Staehle Maschinenbau
Gesellschaft mit beschränkter
Haftung
Dieselstraße 25
7022 Leinfelden-Echterdingen 2

A n s p r ü c h e :

1. Vorrichtung zum Herstellen von Hohlkörpern aus thermoplastischem Material durch Tauchblasen, mit mindestens
einem Blasdorn, der von einer Tauchstation mit mindestens einer Kunststoffkammer sowie mindestens einer
zweiteiligen Spritzform zum Spritzen eines Halsteiles
des herzustellenden Hohlkörpers in eine Blasstation
mit mindestens einer ebenfalls zweiteiligen Blasform
bewegbar ist, und mit einer Schließvorrichtung für die
Blas- und Spritzform, die jeweils eine bewegbare Formhälfte haben, dadurch gekennzeichnet, daß die bewegbaren Spritz- und Blasformhälften (3 und 3' bzw. 4 und 4')
gemeinsam mit dem Blasdorn (1; 1') über die Schließvorrichtung (16) in die Schließ- und Offenstellung bzw.
eine Zwischenlage zum freien Verschwenken des Blasdornes bewegbar sind.

2. Vorrichtung nach Anspruch 1, dadurch gekennzeichnet, daß
die gemeinsame Schließvorrichtung (16) durch eine
Kolben-Zylinder-Vorrichtung gebildet ist.

3. Vorrichtung nach Anspruch 1 oder 2, dadurch gekennzeichnet, daß der Blasdorn (1; 1') mit einem Blasdornträger
(2) drehbar auf der Kolbenstange (15) sitzt.

4. Vorrichtung nach einem der Ansprüche 1 bis 3, dadurch gekennzeichnet, daß der Blasdornträger (2) mit einer Antriebsvorrichtung (26) verbunden ist.

5. Vorrichtung nach einem der Ansprüche 1 bis 4, dadurch gekennzeichnet, daß der Blasdornträger (2) über ein Ende, vorzugsweise eine mit einer Verzahnung (31) versehene Endplatte (32), mit der Antriebsvorrichtung (26), vorzugsweise einem Ritzel (29) der Antriebsvorrichtung, in Eingriff steht.

6. Vorrichtung nach einem der Ansprüche 1 bis 5, dadurch gekennzeichnet, daß der Blasdornträger (2) mit seinem mit der Antriebsvorrichtung (26) verbundenen und vom Blasdorn (1; 1') abgewandten Ende auf einem Anschlag (53), vorzugsweise einem Ringbund, der Kolbenstange (15) ruht.

7. Vorrichtung, bei der auf dem Blasdorn ein Abstreifer verschiebbar angeordnet ist, nach einem der Ansprüche 1 bis 6, dadurch gekennzeichnet, daß der Abstreifer (33, 33') mit mindestens einer Laufrolle (39, 39') auf einer feststehenden Kurvenscheibe (37) geführt ist, die vorzugsweise an der die feststehenden Formhälften (3 und 4) aufweisenden Platte (22) befestigt ist.

8. Vorrichtung nach Anspruch 7, dadurch gekennzeichnet, daß der eine, beim Verschwenken des in der Blasstation (B) liegenden Blasdornes (1') in die Tauchstation (T) von dessen Laufrolle (39') überfahrene Kurvenabschnitt (41) der Kurvenscheibe (37) mindestens teilweise von der Achse (13) der Kolbenstange (15) größeren Abstand hat als der von der Laufrolle (39) des anderen Blasdornes (1) gleichzeitig überfahrene Kurvenabschnitt und daß der größte Abstand des Kurvenabschnittes (41) von der Achse (13) der Kolbenstange (15) derart bemessen ist, daß der Abstreifer (33') im wesentlichen über die gesamte Länge des Blasdornes (1) bzw. von Führungsstangen (34, 34') des Blasdornträgers (2) nach außen
verschiebbar ist.

9. Vorrichtung nach einem der Ansprüche 1 bis 8, dadurch
   gekennzeichnet, daß in einer die bewegbaren Formhälften
   (3', 4') tragenden Formschlußplatte (24), vorzugsweise
   zwischen der zugehörigen Formhälfte (4') der Blasform
   (4, 4') und der Kolbenstange (15), eine Heizeinrichtung
   (45a, 45b, 45c; 46; 50a, 50b, 50c) angeordnet ist, die
   in Schließstellung der Spritz- und Blasform (3, 3' und 4,
   4') mit einem am Blasdorn (1, 1') angeordneten Heizelement, vorzugsweise einem Heizband (44a, 44b 44c),
   und /oder dem Blasdorn (1') in Kontakt steht.

10. Vorrichtung nach Anspruch 9 , dadurch gekennzeichnet,
    daß die Heizeinrichtung (45a, 45b, 45c; 46; 50a, 50b,
    50c) aus mindestens einem Temperaturfühler (50a, 50b,
    50c) und/oder mindestens einem Kontaktstift (45a,
    45b, 45c; 46) besteht.

*Fig. 1*

Fig. 2

Fig. 3

Fig. 4

Fig.5

Fig.6

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | US - A - 4 144 013 (SIMMONS) | | B 29 C 17/07<br>B 29 D 23/03 |
| X | * Spalte 3, Zeile 51 - Spalte 4, Zeile 17; Figuren 5-7 * | 1 | |
| A | * Spalte 2, Zeilen 40-55; Figuren 2,3 * | 2 | |
| | -- | | |
| X | DE - U - 1 777 051 (GROTZ) | | |
| | * Das ganze Dokument, insbesondere Spalte 7, Zeilen 4-26; Figur 1 * | 1,2 | |
| | -- | | |
| A | DE - A - 1 704 162 (KAUTEX) | | |
| | * Spalte 11, Mitte - Spalte 13, unten; Ansprüche 1,2; Figur 2 * | 1,3-6 | RECHERCHIERTE SACHGEBIETE (Int. Cl. ³) |
| | -- | | |
| A | US - A - 3 850 560 (FARRELL) | | B 29 C<br>B 29 D |
| | * Spalte 2, Zeile 37 - Spalte 3, Zeile 10; Figur 2 * | 3,4 | |
| | -- | | |
| A | FR - A - 1 560 395 (AOKI) | | |
| | ---- | | |

~~Der vorliegende Recherchenbericht wurde für alle Patentansprüche erstellt.~~

| Recherchenort | Abschlußdatum der Recherche | Prüfer |
|---|---|---|
| Den Haag | 28-06-1984 | WELSCH |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein- stimmer des Dokument

EPA Form 1503 03.82

## GEBÜHRENPFLICHTIGE PATENTANSPRÜCHE

Die vorliegende europäische Patentanmeldung enthielt bei ihrer Einreichung mehr als zehn Patentansprüche.

☐ Alle Anspruchsgebuhren wurden innerhalb der vorgeschriebenen Frist entrichtet. Der vorliegende europäische Recherchenbericht wurde für alle Patentansprüche erstellt.

☐ Nur ein Teil der Anspruchsgebühren wurde innerhalb der vorgeschriebenen Frist entrichtet. Der vorliegende europäische Recherchenbericht wurde für die ersten zehn sowie für jene Patentansprüche erstellt für die Anspruchsgebühren entrichtet wurden,

nämlich Patentansprüche:

☐ Keine der Anspruchsgebühren wurde innerhalb der vorgeschriebenen Frist entrichtet. Der vorliegende europäische Recherchenbericht wurde für die ersten zehn Patentansprüche erstellt.

## ☒ MANGELNDE EINHEITLICHKEIT DER ERFINDUNG

Nach Auflassung der Recherchenabteilung entspricht die vorliegende europäische Patentanmeldung nicht den Anforderungen an die Einheitlichren der Erfindung: sie enthält mehrere Erfindungen oder Gruppen von Erfindungen, nämlich

1. Patentansprüche 1-6: Antrieb für Spritz- und Blasformhälften und Blasdorn.

2. Patentansprüche 7,8: Abstreiferbetätigung.

3. Patentansprüche 9,10: Heizung für Blasdorne.

☐ Alle weiteren Recherchengebühren wurden innerhalb der gesetzten Frist entrichtet. Der vorliegende europäische Recherchenbericht wurde für alle Patentansprüche erstellt.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind.

nämlich Patentansprüche

☒ Keine der weiteren Recherchengebühren wurde innerhalb der gesetzten Frist entrichtet. Der vorliegende europäische Recherchenbericht wurde fur die Teile der Anmeldung erstellt, die sich auf die zuerst in den Patentansprüchen erwähnte Erfindung beziehen.

nämlich Patentansprüche:    1-6